# EUROPEAN PATENT APPLICATION

(11) **EP 0 877 378 A2**
(43) Date of publication of application: **11.11.1998**
(21) Application number: 98303648.4
(22) Date of filing: 08.05.1998
(51) Int. Cl.: G11B 27/034, G11B 27/34, G06F 3/033

(54) **Method of and apparatus for editing audio or audio-visual recordings**

(30) Priority: 08.05.1997 GB 9709341
(71) Applicant: BRITISH BROADCASTING CORPORATION, London W1A 1AA (GB)
(72) Inventor: Kirby, David Graham, Tadworth, Surry, KT20 6NP (GB)
(74) Representative: Abnett, Richard Charles

(57) **Abstract**

An audio editor displays not only the electrical waveform (34) of an audio or audio-visual recording being edited, but also the text (36) of speech material included in the recording, the text being generated automatically from the recording by a speech recognition device (18). Location of a desired edit point is greatly facilitated, and editing of the audio recording may be performed by word processing operations on the text alone.

## Description

### Background of the Invention

This invention relates to a method of and apparatus for editing audio or audio-visual recordings.

Equipment for editing audio or audio-visual recordings is in common use in studios. For example editing can be achieved by re-recording material from one medium, e.g. a tape, in a different order onto another tape. Alternatively, equipment now exists which employs computer-based technology to store, select, and replay sections of an original recording in an order chosen by the operator, without altering the original recording.

In such editing, the operator may be provided with a display of the recorded electrical signal in order to enable the precise location of a desired cut to be accurately determined. However, the only way that the operator can determine the general location of the desired cut point is by listening to the recording. To determine the desired edit point it is therefore necessary for the operator to listen to the audio material at normal replay speed or something fairly close to it, so as to be able to select the appropriate part of the recording.

If the recording is an audio-visual recording, the same requirement exists, though in this case the video will normally be displayed also. It can therefore take a long time to find the desired location, and it is difficult to be sure when the operator reaches the desired location, exactly which part of the waveform corresponds to the desired edit point.

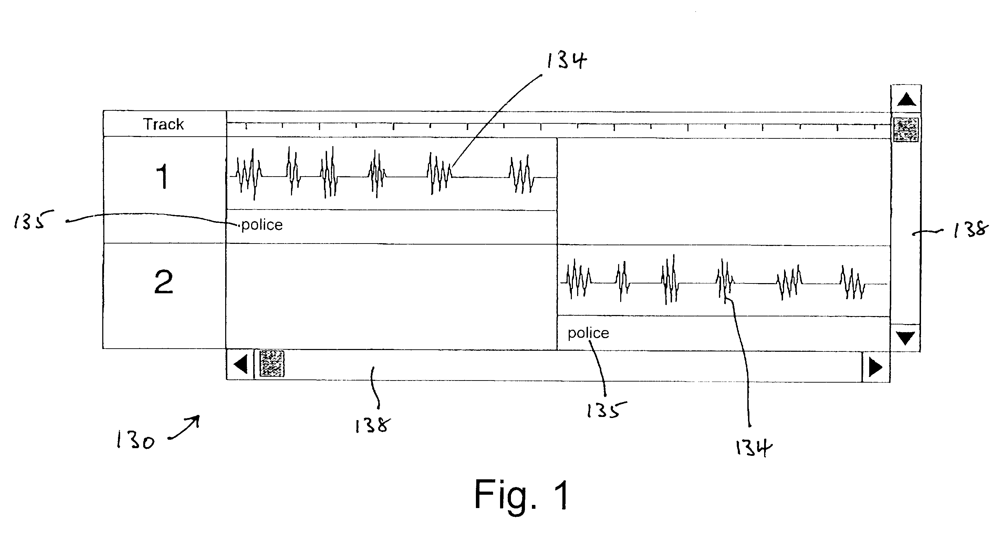

An example of part of a display 130 currently provided to an operator is given in Figure 1 of the drawings. This shows a waveform display used to position edit points within the audio recordings. In this case a single edit is shown, between the upper track 1 and the lower second track 2. For each track the current part of the signal waveform is shown at 134. To identify the source of these segments, they may each carry a recording name 135, shown at the left hand end of their respective regions. In this example the recording name is "police" and is the same for both tracks. All this name does is to identify the recording as a whole. The vertical line between the two regions is the point where the edit between the two segments takes place and, as can be seen from this figure, it is quite difficult for the operator to tell where this edit point is within the audio recording itself. The display 130 also includes scroll bars 138 to adjust which part of the waveform is displayed.

It has been proposed elsewhere to use speech recognition technology in order to index material in a video library, see Wactlar, H., Kanade, T., Smith, M., Stevens, S. "Intelligent Access to Digital Video: The Informedia Project", IEEE Computer, Vol. 29, No. 5, May 1996. In that system the audio-visual material in the video library is replayed, and a speech recognition system generates a transcript of the spoken audio which it stores in a full-text information retrieval system. This text database permits rapid retrieval of individual video segments on the basis of the words recognised from the soundtrack. An index can be generated automatically if desired. Another indexing system which uses a technique called 'wordspotting' to provide indexing is described in the Proceedings of the 1992 Conference on Human Factors in Computer Systems, ISBN 0 89791 513 5, at pages 655-656.

European Patent Application EP-A-0 649 144 also describes the use of speech recognition to align a written transcript with speech in video or audio recordings. It is stated that this can be used to enhance the editing of text that was dictated to a stenographer or on tape fcr its subsequent textual reproduction by a typist. The system requires that the original text, or at least a significant part of it, is available.

United Kingdom Patent Application GB-A-2 289 395 describes a method of labelling digital audio, using speech recognition to generate text based on the audio data. This is used to label the file with its content.

Finally, Japanese Patent Applications Publication Numbers 1997-9199 and 1997-91928 describe different systems using speech recognition techniques for timing purposes in relation to audio or image data.

### Summary of the Invention

The present invention in its various aspects is defined in the independent claims below, to which reference should now be made. Advantageous features are set forth in the appendant claims.

A preferred embodiment of the invention is described in more detail below with reference to the drawings. In this embodiment an audio editor displays not only the electrical waveform of an audio or audio-visual recording being edited, but also the text of speech material included in the recording, the text being generated automatically from the recording by a speech recognition device. Location of a desired edit point is greatly facilitated, and editing may be performed by word processing operations on the text alone.

### Brief Description of the Drawings

The invention will now be described in more detail, by way of example, with reference to the accompanying drawings, in which:
**Figure 1** (described above) illustrates the operator display provided by known audio editing equipment;
**Figure 2** is a block circuit diagram showing an audio editing system embodying the invention;
**Figure 3** illustrates the operator display provided by the audio editing system of Figure 2; and
**Figure 4** is a block circuit diagram of an audio editing system embodying the invention and based on Figure 2, modified for network operation.

### Detailed Description of the Preferred Embodiment

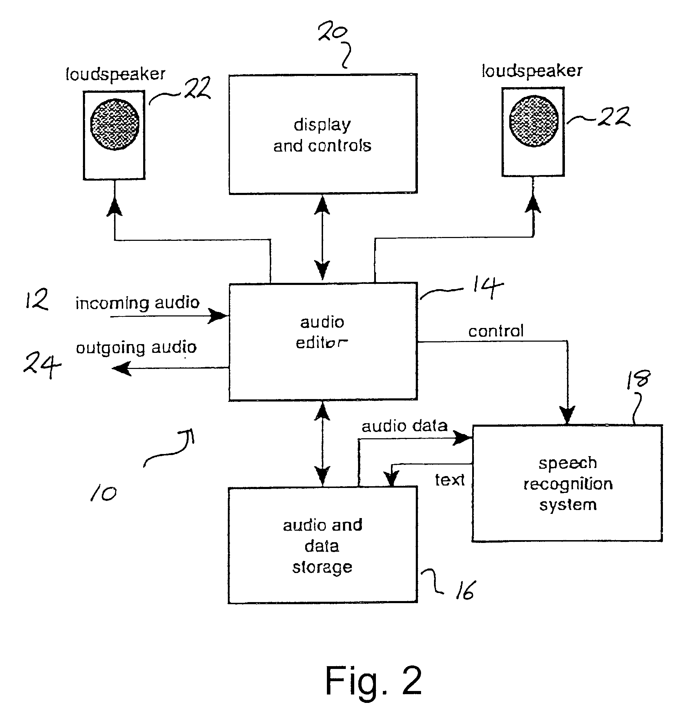

The preferred embodiment of the invention illustrated in Figure 2 will now be described.

The editing system 10 shown in Figure 2 has an input 12 for receiving incoming audio in the form of an electrical signal. The incoming audio signal at input 12 is applied to an audio editor 14. To the editor 14 are connected a storage device 16 for storing both audio material and data, a speech recognition system 18, a display device 20 which is also provided with certain operator controls, and two loudspeakers 22. The editor 14 is also capable of providing an audio output signal at an audio output 24. The speech recognition system 18 is coupled to the audio and data storage device 16 so as to receive audio data from the storage device 16 and to apply text to the storage device 16 for storage in it. The storage device 16 may take the form of magnetic or optical discs commonly used in computer applications.

The system 10 illustrated is similar to a known system except for the addition of the speech recognition system 18 and its connections, the expansion of the storage device 16 to store also the text data, and consequential alterations within the audio editor 14 and in the display and controls 20.

The manner in which the system operates will now be described.

An audio recording is received, from a live source or a replay device, at the input terminal 12 and is conveniently first stored in the storage device 16. All or selected parts of the thus-recorded audio signal is then replayed, and the audio data is applied from the storage device 16 to the speech recognition system 18. The speech recognition system 18 analyses the received electrical signal with a view to determining what spoken words exist on the recording, and sends a text signal representing the text thus identified to the storage device 16. When it is desired to make an edit, the audio signal recorded in the storage device 16 and the text signal recorded in the storage device 16 are both applied by the editing system 14 to the display 20. The audio signal is also applied to the loudspeakers 22 so as to be audible to the operator of the editing system.

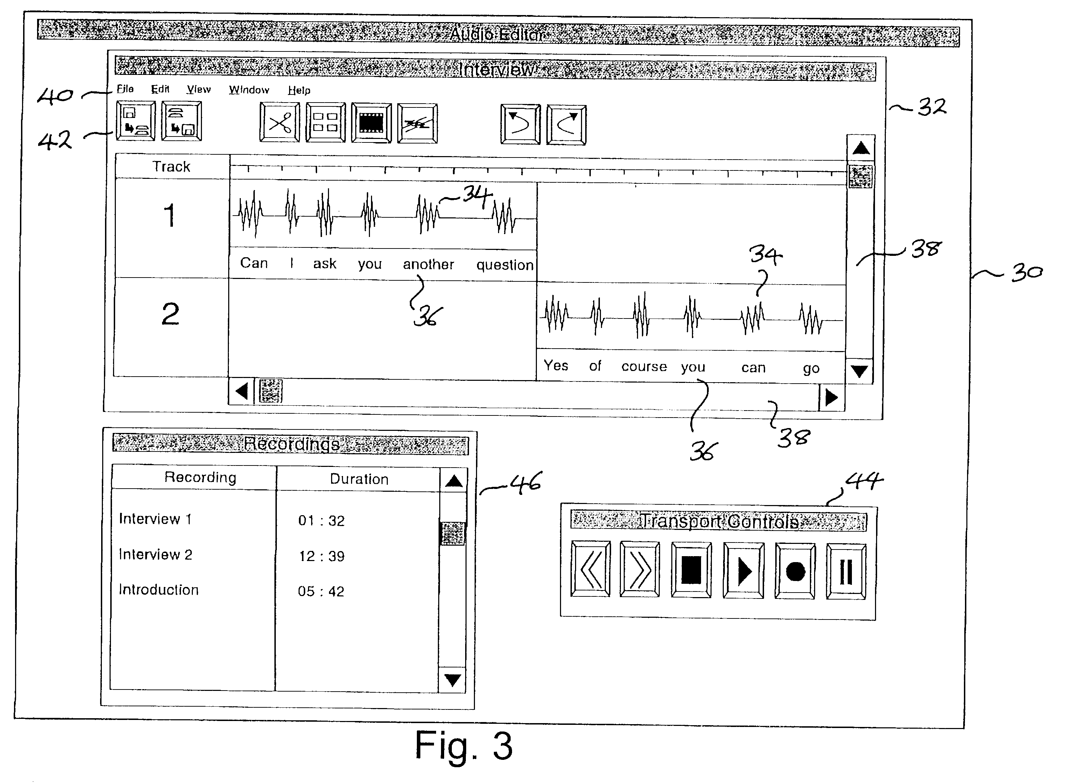

The display seen by the operator is illustrated in Figure 3. The display is reproduced on any suitable display device such as a conventional cathode ray tube (CRT) display.

The display 30 has as its main part a signal display area 32 which is capable of displaying two parts of the signal recorded in the storage device 16. These are referred to as track 1 and track 2, it being desired to cut from a defined point in track 1 to another defined point in track 2. In each track section of the signal display area, the display includes not only a display 34 of the electrical waveform of the signal, but also a display 36 of the words which have been recognised by the speech recognition system.

It will be seen from Figure 3 that it is immediately very much clearer at exactly which part of the waveform lies the appropriate place to make a cut, than was the case with Figure 1. The addition of the text words to the screen display acts as an additional navigation aid to assist the operator.

Alternatively the text can be used in its own right to assist in making the edit, for example by using a search facility to find a particular location. The text in effect constitutes a recorded transcript of the audio material which is an additional advantage of the system.

Thus it is no longer necessary to slow down the editing process to a speed at which the operator can follow the spoken dialogue. It can be replayed at a speed at which the audio is itself unintelligible, and the general location of a desired edit can be found by use of the recorded text data. Desired sections can in this way be rapidly located, by the operator or automatically. The editing process can therefore be greatly speeded up.

When the general area of the desired edit is reached, the generator can very quickly locate the precise part of the waveform 34 at which the edit is to be made, by looking at the text 36.

Not only speech can be recognised, but with the addition of appropriate recognition technology, other sounds such as music or impulsive sounds, e.g. a crash, and also silence, can be recognised, and an appropriate label in text or other form generated and recorded.

Having the waveform 34 supplemented by the time aligned markers 36 in the form of words thus greatly increases the productivity of the system and the method.

The display 30 also includes scroll bars 38 to adjust which part of the data in the storage device 16 is displayed, and menus 40 and icons 42 which are used by the operator for control, particularly editing purposes. The display also includes transport controls 44 for starting and stopping the replay of the edited material and repositioning within it, and a table 46 containing data about the resultant recording which is being assembled by the editor.

If the system is being used with an audio-visual recording rather than a purely audio recording, the equipment and display are similar, but the video is also displayed at the same time.

The speech recognition software can be any of several known systems. Provided that the system accuracy is sufficiently high for the operator to be able to follow the conversation, it does not matter if its accuracy is somewhat less than 100%, though low accuracy does make computer searching considerably less reliable.

The display can show only the text and not include the waveform at all. The text can then be edited in a manner analogous to a word processing operation. A text editor or a full word processor can be used to effect this operation and is incorporated in the audio editor 14 in Figure 2. Text can be selected and copied or moved, and cut and paste operations effected. Moving the text then has the effect of causing a corresponding edit in the audio signal or recording itself. More particularly, the operator manually enters commands on a keyboard to cut, copy or paste the displayed text, thereby causing editing of the text signal. In response to this, the audio editor 14 automatically edits the recording stored in the storage device 16 in correspondance with the editing operations on the text signal.

A single system of the type shown in Figure 2 can be switchable between two working views or modes, in one of which the waveform is displayed with the text and in the other of which only text is displayed.

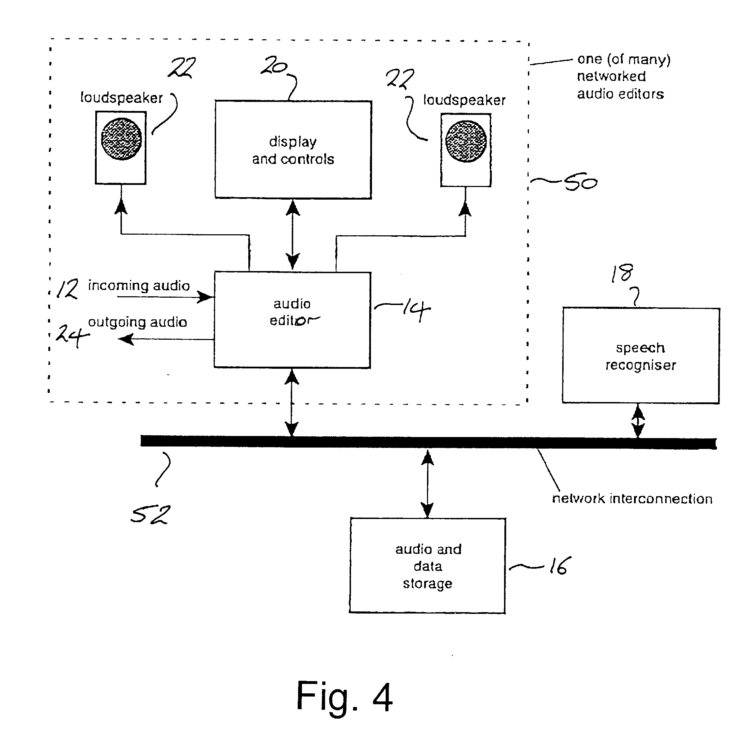

Figure 4 shows another modification of the system of Figure 2 in which several networked audio editors share the same speech recogniser 18 and storage device 16. In this case one editor system 50 is shown. Instead of the editor 14 being directly connected to the storage device 16 and the speech recogniser 18, a network 52 connects the single storage device 16 and the single speech recogniser 18 to the editors 14 of all the editor systems 50 coupled to the network.

## Claims

1. A method of editing an audio or audio-visual recording, the method comprising the steps of:
replaying at least part of the recording to generate an electrical signal representing the audio material recorded on the recording;
applying speech recognition techniques to the electrical signal to generate a text signal representing as text spoken words which are included in the audio material recorded on the recording;
displaying at least the text represented by the text signal generated by the application of speech recognition techniques to an editing operator;
identifying a desired edit by reference to the displayed text signal; and
making an edit such as to edit the audio or audio-visual recording.

2. A method according to claim 1, in which the displaying step includes displaying the text adjacent to a display of a signal directly representing the waveform of the said electrical signal.

3. A method according to claim 1 or 2, in which the recording is an audio-visual recording and the displaying step includes the step of displaying the video image represented by the audio-visual recording.

4. A method according to claim 1, 2 or 3, in which the step of making an edit comprises making an edit by operator commands to cut, copy or paste the text to cause editing of the text signal and automatically editing the audio or audio-visual recording in correspondance with the operations on the text signal.

5. Apparatus for editing an audio or audio-visual recording, the apparatus comprising:
means (16) for storing an audio or audio-visual recording;
means (14, 16) for replaying at least part of the recording to generate an electrical signal representing the audio material recorded on the recording;
speech recognition means (18) coupled to the replaying means to receive the electrical signal and to apply speech recognition techniques to the electrical signal to generate a text signal representing as text spoken words which are included in the audio material recorded on the recording;
a display device (20) coupled to the replaying means and to the speech recognition means for displaying at least the text represented by the text signal generated by the speech recognition means to an editing operator; and
editing means (14) for making an edit at a point identified by an operator by reference to the displayed text signal such as to edit the audio or audio-visual recording stored on the storage means.

6. Apparatus according to claim 5, in which the display device displays the text signal (36) adjacent to a display of a signal (34) directly representing the waveform of the said electrical signal.

7. Apparatus acccrding to claim 5 or 6, in which the display device also displays a video image derived from the recording.

8. Apparatus according to claim 5, 6 or 7, in which the editing means (14) includes a text editor responsive to operator commands to cut, copy or paste the text by operating on the text signal and the editing means editing the audio or audio-visual recording in correspondance with the operations on the text signal.

9. Apparatus according to claim 8, in which the display device is operable in a first mode wherein it displays the text adjacent to a display of a signal directly representing the waveform of the electrical signal and in a second mode wherein it displays the text without the display of a signal directly representing the waveform of the electrical signal.
